# EUROPÄISCHE PATENTSCHRIFT

(11) **EP 2 666 397 B1**
(45) Veröffentlichungstag und Bekanntmachung des Hinweises auf die Patenterteilung: **22.06.2016**
(21) Anmeldenummer: 13167279.2
(22) Anmeldetag: 10.05.2013
(51) Int. Cl.: A47J 43/04, A47J 43/046, A47J 43/07

(54) **Küchenmaschine mit einem Rührgefäß sowie Verfahren zur Montage einer Küchenmaschine**
Kitchen appliance with a mixing bowl and method for installing the same
Machine de cuisine dotée d'un récipient de mélange et procédé de montage d'une machine de cuisine

(30) Priorität: 24.05.2012 DE 102012104495
(43) Veröffentlichungstag der Anmeldung: 27.11.2013
(73) Patentinhaber: Vorwerk & Co. Interholding GmbH, 42275 Wuppertal (DE)
(72) Erfinder: Starflinger, Frank, 44793 Bochum (DE); Arnold, Hans-Peter, 58566 Kierspe (DE)
(74) Vertreter: Müller, Enno

(56) Entgegenhaltungen:
- EP-A1- 0 561 259
- DE-A1-102008 040 740
- DE-A1-102008 040 741
- DE-A1-102009 058 258
- DE-A1-102010 060 650

## Beschreibung

Die Erfindung betrifft zunächst eine Küchenmaschine mit einem Rührgefäß und einem Rührwerk in dem Rührgefäß, weiter mit einem elektrisch betriebenen Motor zum Antrieb des Rührwerks, mit einem als Chassis ausgebildeten, tragenden Gehäuseteil und einer den Boden bildenden Gehäusewanne, wobei weiter Gerätefüße vorgesehen sind, die mit Wägemodulen verbunden sind.

Küchenmaschinen der in Rede stehenden Art sind bekannt. Es wird beispielsweise auf die DE 20219 442 A1 verwiesen. Solche Küchenmaschinen dienen insbesondere im Haushaltsbereich der Verarbeitung von Lebensmitteln sowie weiter bevorzugt der Zubereitung von Speisen in dem Rührgefäß. Das Rührgefäß ist bevorzugt von einer maschinenseitigen Gefäßaufnahme abhebbar. Ein bevorzugt in dem Rührgefäß, weiter bevorzugt bodenseitig vorgesehenes Rührwerk wird in Zuordnungsstellung des Rührgefäßes in der Gefäßaufnahme angetrieben über einen in der Küchenmaschine angeordneten Elektromotor. Bei den bekannten Lösungen ist das Maschinenchassis ausgelegt zur Aufnahme der über die Maschine selbst, weiter über das Rührgefäß sowie den Inhalt in dem Rührgefäß einwirkenden Gewichte, wobei weiter das Gehäuseteil unmittelbar tragend, das Chassis ausbildend, ausgelegt ist oder zumindest mit dem vom Gehäuse umschlossenen Chassis verbunden ist. Eine Gehäusewanne formt hierbei den Boden der Küchenmaschine aus. Weiter bodenseitig sind Gerätefüße zum Abstellen der Küchenmaschine beispielsweise auf einer Arbeitsfläche vorgesehen. Diese tragen bevorzugt das gesamte Gewicht der Küchenmaschine, weiter bevorzugt im Betrieb derselben inklusive der abnehmbaren Teile wie Rührgefäß, Deckel für das Rührgefäß usw., darüber hinaus des Inhaltes des Rührgefäßes. In diesem Zusammenhang ist es weiter bekannt, die Gerätefüße mit Wägemodulen zu verbinden, so weiter insbesondere mit elektrischen Wägemodulen, deren Wägeergebnis küchenmaschinenseitig ausgewertet und beispielsweise auf einem Display angezeigt wird. Das ermittelte und angezeigte Gewicht ist bevorzugt das Gewicht des Rührgefäß-Inhalts, so dass die weiteren Gewichte, insbesondere das der Küchenmaschine selbst aus der Bewertung herausgerechnet wird.

Zum Stand der Technik ist des Weiteren auf die DE 10 2008 040 740 A1, die DE 10 2009 058 258 A1, die DE 10 2010 060 650 A1, die DE 10 2008 070 741 A1 und die EP 0 561 259 A1 zu verweisen.

Ausgehend von dem zunächst angeführten Stand der Technik beschäftigt sich die Erfindung mit der Aufgabe, eine Küchenmaschine der genannten Art hinsichtlich einer günstigen Montage beziehungsweise Demontage vorteilhaft auszugestalten.

Diese Aufgabe ist beim Gegenstand des Anspruches 1 gelöst, wobei darauf abgestellt ist, dass die Wägemodule an einem gemeinsamen Aufnahmeteil angebunden sind, das die notwendige Verkabelung für die Wägemodule aufweist, wobei die Gerätewanne auch bei montierten Gerätefüßen mit dem Chassis verbindbar und/ oder von dem Chassis lösbar ist. Zufolge dieser Ausgestaltung ist eine Küchenmaschine der in Rede stehenden Art angegeben, welche sich insbesondere hinsichtlich der Montage beziehungsweise der Demontage als günstig erweist. Die Wägemodule sind bevorzugt vorkonfektioniert an einem gemeinsamen Aufnahmeteil angeordnet, welches Aufnahmeteil quasi ein Sammelmodul darstellt. Auch ist hierbei bevorzugt die notwendige Verkabelung für die Wägemodule in dem Aufnahmeteil vorverlegt angeordnet, so dass in bevorzugter Ausgestaltung zur Montage der Küchenmaschine hinsichtlich der Wägemodule allein das Einsetzen des Aufnahmeteiles erforderlich ist, womit hiernach auch die Wägemodule in ihrer vorbestimmten Position hinsichtlich der Küchenmaschine angeordnet sind. Eine aufwendige Anordnung einzelner Wägemodule im Zuge der Gerätemontage sowie entsprechend auch die aufwendige Verkabelung der Wägemodule entfällt bevorzugt im Zuge der Maschinenmontage.

### (Weiter auf Seite 3, oben der ursprünglich eingereichten Unterlagen.)

In weiter bevorzugter Ausgestaltung sind an den an dem Aufnahmeteil angebundenen Wägemodulen bereits auch die Gerätefüße angeordnet. Die Anordnung ist weiter so gewählt, dass die insbesondere durch die an dem Aufnahmeteil, weiter bevorzugt an den Wägemodulen montierten Gerätefüße die Gerätewanne zur Abstützung der Küchenmaschine auf einer Arbeitsfläche oder dergleichen durchsetzen. Die Gerätewanne ist auch bei insbesondere durch die Gerätewanne durchgreifenden Gerätefüßen mit dem Chassis der Küchenmaschine verbindbar, dies weiter insbesondere zufolge Anheben der Gerätewanne und Festlegung derselben an dem Chassis, beispielsweise durch Verschraubung oder Verklipsung. Entsprechend ist in weiter bevorzugter Ausgestaltung auch ein Lösen der Gerätewanne vom Chassis bei durch die Gerätewanne durchgreifenden Gerätefüßen ermöglicht, dies weiter insbesondere nach Aufhebung einer Verbindung zwischen Gerätewanne und Chassis zufolge Absenken der Gerätewanne in eine bevorzugte Ablageposition, in welcher die Gerätewanne weiter bevorzugt auf derselben Fläche aufliegt, auf der sich auch die Gerätefüße abstützen.

Hierzu weist die Gerätewanne in bevorzugter Ausgestaltung von den Gerätefüßen durchsetzte Durchbrechungen auf. Diese Durchbrechungen sind weiter bevorzugt hinsichtlich ihrer grundrissmäßigen Öffnungsflächen angepasst an die größte Grundrissfläche der Gerätefüße, so dass letztere die Gerätewanne beziehungsweise den Bodenabschnitt der Gerätewanne vollständig durchsetzen können.

Weiter ist durch die vorgeschlagene Lösung eine Montage der Küchenmaschine allein von oben ermöglicht, indem bevorzugt auf der Gerätewanne sämtliche Bauteile, bevorzugt beginnend mit dem die Wägemodule und bevorzugt die Gerätefüße aufweisenden Aufnahmeteil aufgesetzt werden, bei weiter bevorzugt abschließendem Anheben der Gerätewanne und Festlegung derselben an dem Chassis. Hierdurch ist eine günstige Montage der Küchenmaschine ermöglicht. Eine Demontage erfolgt bevorzugt in umgekehrter Reihenfolge, wobei allein durch Absenken der Gerätewanne in weiter bevorzugter Ausgestaltung bereits ein Zugriff auf die Verkabelung der Wägemodule ermöglicht ist.

Die Wägemodule können an einem gemeinsamen Aufnahmeteil angebunden sein und das Aufnahmeteil kann zugleich zur Halterung des Motors ausgebildet sein und/oder eine Luftführung zur Motorkühlung ausbilden. Auch hierdurch ist in vorteilhafter Weise eine günstige Montage beziehungsweise Demontage der Küchenmaschine erreicht. Das Aufnahmeteil ist in Art eines Sammelmoduls ausgebildet, welches im Zuge der Maschinenmontage bereits die Wägemodule trägt und bevorzugt zudem die Halterung des Elektromotors für das Rührwerk ausbildet. Entsprechend ist hierdurch eine Reduzierung der Montageschritte im Zuge der Küchenmaschinen-Montage erreicht, dies weiter bevorzugt auch zusätzlich oder alternativ zufolge Ausbildung der Luftführung zur Motorkühlung in dem Aufnahmeteil.

In einer bevorzugten Ausgestaltung ist weiter vorgesehen, dass das Aufnahmeteil eine nach oben offene Nut ausbildet, in der die Verkabelung aufgenommen ist. In dieser nach oben und hierdurch entsprechend bevorzugt im Zuge der Maschinenmontage von oben zugänglichen Nut des Aufnahmeteils ist insbesondere die Verkabelung der Wägemodule verlegt. Bevorzugt sind hierbei die Kabel in der Nut gehaltert, beispielsweise klemmgehaltert. Zufolge dieser Ausgestaltung entfällt während der Küchenmaschinen-Montage bevorzugt die Verlegung von Kabeln insbesondere zum Anschluss der Wägemodule. Vielmehr ist bevorzugt lediglich ein Anschließen der mit den Wägemodulen verbundenen Kabel abschließend nötig. Die nach oben offene Nut bietet darüber hinaus die Möglichkeit eines Wechsels der Verkabelung, da diese weiterhin zugänglich ist. Zudem können in dieser Nut gegebenenfalls weitere Kabel gut zugänglich eingelegt werden.

Das Aufnahmeteil ist in bevorzugter Ausgestaltung im Wesentlichen kreisringförmig ausgebildet, so weiter bevorzugt insbesondere den Bereich der Motorhalterung und/oder die Nut zur Aufnahme der Verkabelung betreffend. Von dieser Kreisringform abweichend sind in weiter bevorzugter Ausgestaltung mit Bezug zu dem Kreisring im Wesentlichen nach radial außen vorspringende Abschnitte vorgesehen, an welchen Abschnitten weiter bevorzugt die Wägemodule mit den darin angeordneten Gerätefüßen vormontiert sind.

Die Küchenmaschine weist in bevorzugter Ausgestaltung mehrere Wägemodule mit hieran angeordneten Gerätefüßen auf, so beispielsweise vier, fünf oder sechs Wägemodule/Gerätefüße. In bevorzugter Ausgestaltung sind drei Gerätefüße vorgesehen mit drei zugeordneten Wägemodulen. Diese sind bevorzugt mit Bezug auf einen Grundriss insbesondere des Aufnahmeteils, weiter auch hinsichtlich des Grundrisses der fertig montierten Küchenmaschine in den Eckbereichen eines aufgezogenen, geometrischen Dreiecks angeordnet.

Eine geometrische Verbindungslinie zweier Gerätefüße stellt hierbei eine mögliche Kippachse dar, wobei bevorzugt jede Kippachse zwischen den Gerätefüßen zu einem Geräteschwerpunkt einen gleichen Abstand aufweist. Die Anordnung der Messpunkte ist entsprechend bevorzugt ungeachtet der Formgebung des bevorzugt entstehenden Dreiecks bei Anordnung von drei Gerätefüßen gewählt. Dies bietet einen sicheren Stand der Küchenmaschine auch im Betrieb derselben, insbesondere im Rührwerkbetrieb. In einer bevorzugten Ausgestaltung führt dies zur Anordnung der Gerätefüße in den Eckbereichen eines nicht gleichschenkligen Dreiecks.

Die Wägemodule sind in weiter bevorzugter Ausgestaltung als Waagebalken ausgebildet. Die Grundform eines solchen Waagebalkens entspricht dem mechanischen Modell eines Vierkant-Balkens, der an einer Seite eingespannt ist und an seinem freien Ende durch Kraft belastet wird. Hierbei treten Spannungen und Dehnungen bevorzugt über die gesamte Balkenfläche auf, welche weiter bevorzugt über einen elektrisch abzugreifenden Dehnungsmessstreifen oder dergleichen erfasst werden. Ein derartiger Waagebalken ist beispielsweise aus der DE 10 2009 059294 A1 bekannt. Der Inhalt dieser Patentanmeldung wird hiermit vollinhaltlich in die Offenbarung vorliegender Erfindung mit einbezogen, auch zu dem Zweck, Merkmale dieser Patentanmeldung in Ansprüche vorliegender Erfindung mit einzubeziehen.

Die bevorzugt an jedem Wägemodul angeschlagene Verkabelung liegt bevorzugt bereits vorverdrahtet in der nach oben offenen, einen Litzenkanal bildenden Nut ein. Die Verkabelung ist hierbei weiter bevorzugt an definierten Stellen mit Zugentlastungen versehen.

In diesem Zusammenhang ist weiter bevorzugt vorgesehen, dass das Aufnahmeteil einen Sammelstecker aufweist, in den sämtliche elektrische Anschlüsse der Wägemodule zusammengeführt sind. Auch dies bietet eine günstige Montage unter Reduzierung der Montageschritte.

Durch die nach oben offene Nut können auch Verkabelungen weiterer elektrischer Komponenten geführt sein, so beispielsweise eine Verkabelung zum Anschluss des bevorzugt auch in dem Aufnahmeteil aufzunehmenden Elektromotors.

In weiter bevorzugter Ausgestaltung ist das Aufnahmeteil so ausgebildet, dass für die Montage notwendige Geräteöffnungen insbesondere im Bereich der Gerätewanne durch das Aufnahmeteil abgedeckt sind, so weiter insbesondere in der angehobenen Verbindungsstellung des Aufnahmeteiles zum Chassis. Entsprechend ist kein nachträgliches Abdecken notwendiger Geräteöffnungen insbesondere im Bereich der Gerätewanne nötig, durch welche Öffnungen Schmutz oder auch Kleinsttiere eindringen könnten.

Das Aufnahmeteil weist in bevorzugter Ausgestaltung keine Fixierung zum Chassis auf. Vielmehr stützt sich das Aufnahmeteil in der montierten Stellung unterseitig auf der das Aufnahmeteil aufnehmenden Gerätewanne ab, welche Gerätewanne mit dem Chassis verbunden ist. Von vertikal oben wird das Aufnahmeteil belastet insbesondere durch die in dem Gehäuse aufgenommenen, zu wiegenden Komponenten, wobei weiter bevorzugt ein direkter Kraftfluss von den Gerätefüßen über die Wägemodule durch das Aufnahmeteil in die zu wiegenden und tragenden Elemente erreicht wird. Zufolge dieser Ausgestaltung bleibt das Aufnahmeteil aus dem Kraftfluss und muss somit keine wesentlichen Festigkeitsanforderungen erfüllen.

Die Erfindung betrifft weiter ein Verfahren zur Montage einer Küchenmaschine mit einem Rührgefäß und einem Rührwerk in dem Rührgefäß, weiter mit einem elektrisch betriebenen Motor zum Antrieb des Rührwerks, mit einem als Chassis ausgebildeten, tragenden Gehäuseteil und einer den Boden bildenden Gerätewanne, wobei weiter Gerätefüße vorgesehen sind, die mit Wägemodulen verbunden sind.

Verfahren zur Montage einer Küchenmaschine der in Rede stehenden Art sind bekannt. Bezüglich der Ausgestaltung und Nutzung einer solchen Küchenmaschine wird auf die Ausführungen bezüglich Anspruch 1 verwiesen.

Im Hinblick auf den bekannten Stand der Technik wird eine technische Problematik der Erfindung darin gesehen, ein Verfahren der in Rede stehenden Art insbesondere hinsichtlich einer günstigen Montage weiter zu verbessern.

Eine mögliche Lösung der Aufgabe ist nach einem ersten Erfindungsgedanken bei einem Verfahren gegeben, bei welchem darauf abgestellt ist, dass zunächst die Gehäusewanne vorgesehen wird, dass in die Gehäusewanne von oben ein die Gerätefüße, die Wägemodule und die Verkabelung aufweisendes Aufnahmeteil eingesetzt wird und dass sodann der Motor und das Chassis ein- bzw. aufgesetzt wird. Zufolge des vorgeschlagenen Verfahrens ist eine Montage einer Küchenmaschine bevorzugt allein aus einer Richtung, nämlich weiter bevorzugt allein von oben ermöglicht. Ein aufwendiges Wenden der Küchenmaschine, um beispielsweise Gerätefüße oder dergleichen unterseitig anzusetzen, ist nicht nötig. Vielmehr wird die Gehäusewanne quasi als Grundelement zunächst vorgesehen, auf welchem von oben nach und nach sämtliche weiteren Komponenten der Küchenmaschine aufgesetzt werden. Das Aufnahmeteil liegt hierbei bevorzugt als vorgefertigtes und vorkonfektioniertes Bauteil vor, bevorzugt aufweisend sämtliche Wägemodule mit bevorzugt hieran angeordneten Gerätefüßen und weiter bevorzugt die Verkabelung der Wägemodule. Die Gerätefüße, welche nach Fertigstellung der Montage unterseitig des Gehäusebodens frei über diesen zur Abstützung der Küchenmaschine beispielsweise auf einer Arbeitsfläche vorragen, tauchen durch entsprechend dimensionierte Öffnungen des Gerätebodens, was in bevorzugter Ausgestaltung ein beispielsweise abschließendes Anheben des Gehäusebodens im Wesentlichen nach vertikal oben, um den Gehäuseboden mit dem Chassis beziehungsweise mit dem weiteren Gehäuseteil zu verbinden.

In vorteilhafter Weise ist durch das vorgeschlagene Verfahren auch eine Demontage der Küchenmaschine in umgekehrter Reihenfolge allein durch Abheben der einzelnen Bauteile beziehungsweise Komponenten nach oben erreichbar.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10- Schritten der jeweiligen Dimension, ggf. also auch dimensionslos, insbesondere 1,01-Fach etc. einerseits zur Eingrenzung der genannten Bereichsgrenzen von unten und/oder oben, alternativ oder ergänzend aber auch im Hinblick auf die Offenbarung eines oder mehrerer singulärer Werte aus dem jeweils angegebenen Bereich.

Nachstehend ist die Erfindung anhand der beigefügten Zeichnung erläutert, die aber lediglich ein Ausführungsbeispiel darstellt. Auf der Zeichnung zeigt:
- Fig. 1: in Ansicht eine Küchenmaschine mit einem Elektromotor zum Antrieb eines Rührwerks in einem Rührgefäß der Küchenmaschine;

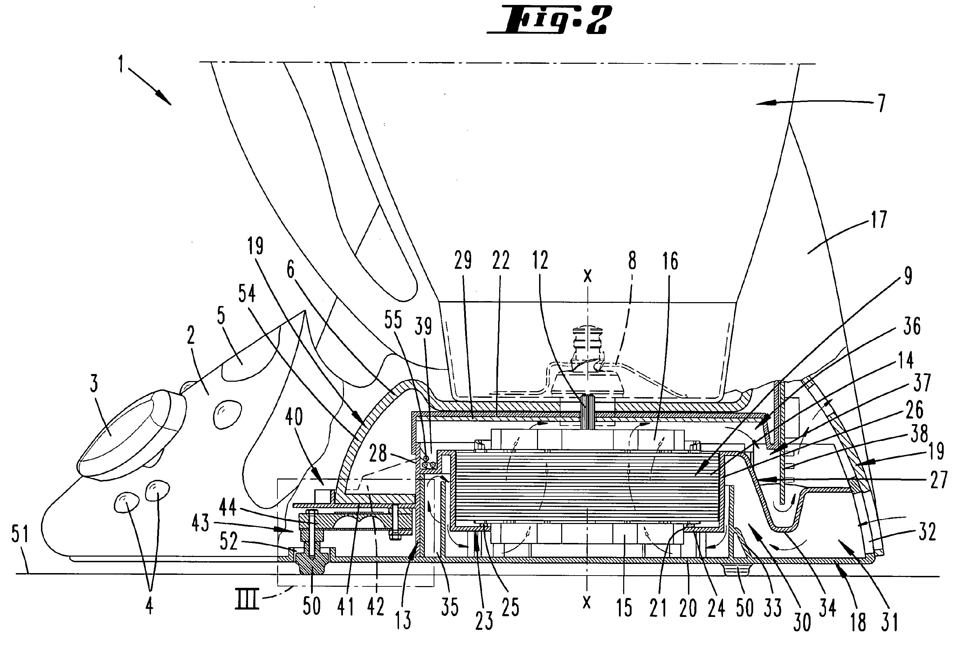

- Fig. 2: den, den Elektromotor aufnehmenden Bodenbereich der Küchenmaschine in partieller Vertikalschnittdarstellung;

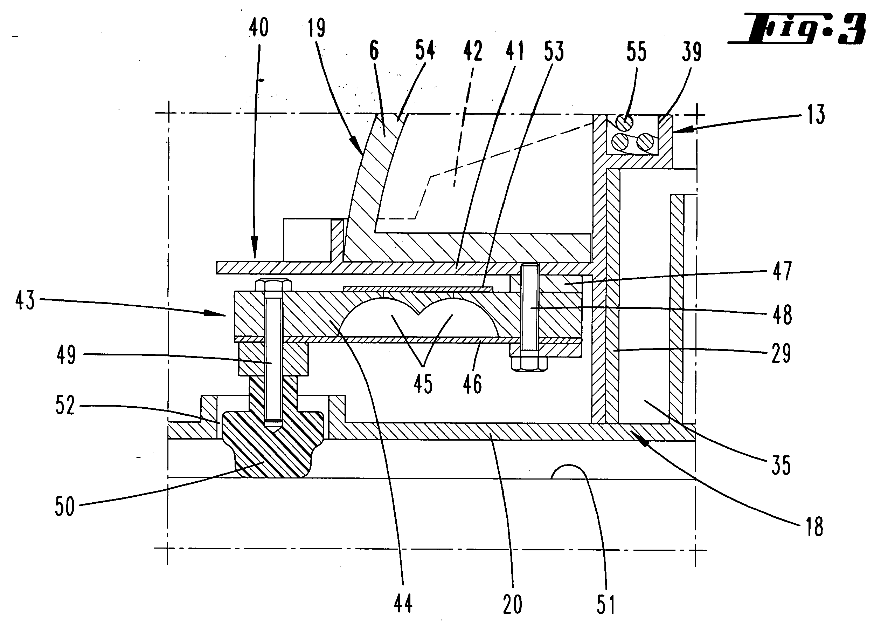

- Fig. 3: die Herausvergrößerung des Bereiches III in Fig. 2;
- Fig. 4: die Draufsicht auf eine Gerätewanne der Küchenmaschine mit hierauf aufgesetztem Aufnahmeteil, unter anderem zur Halterung des Elektromotors;
- Fig. 5: das Aufnahmeteil mit zuordbarem Elektromotor in perspektivischer Einzeldarstellung;
- Fig. 6: die Draufsicht auf das Aufnahmeteil;
- Fig. 7: die Unteransicht gegen das Aufnahmeteil;

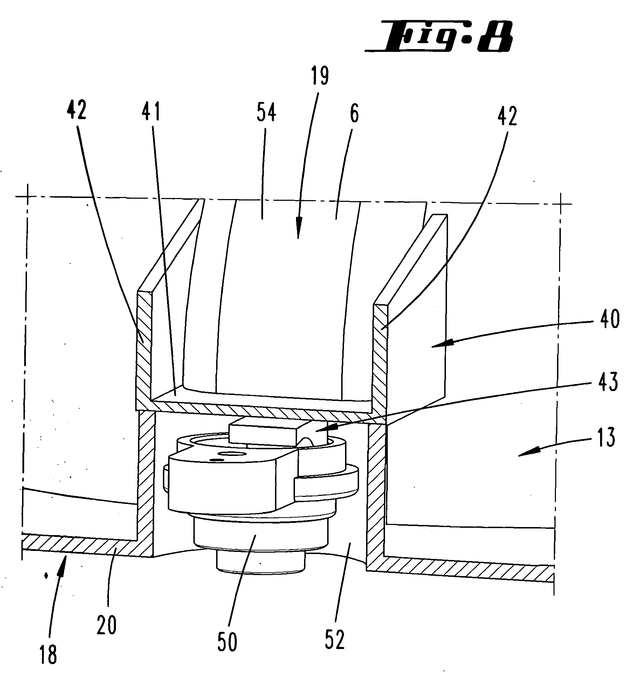

- Fig. 8: eine schematische Perspektivdarstellung eines, ein Wägemodul mit einem Gerätefuß halternden Abschnitts des Aufnahmeteils.

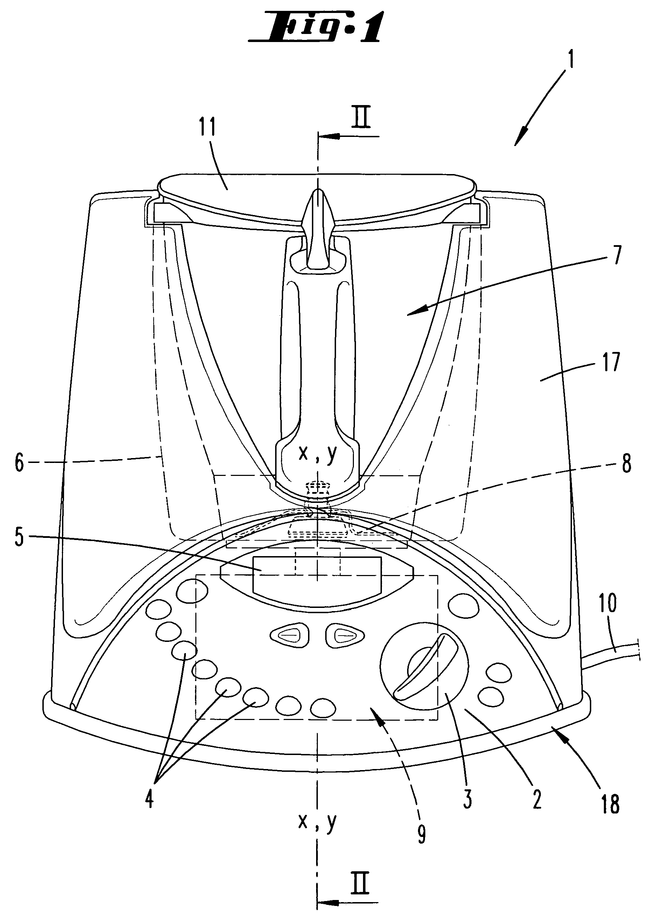

Dargestellt und beschrieben ist zunächst mit Bezug zu Fig. 1 eine elektrisch betriebene Küchenmaschine 1. Diese weist zunächst ein Bedienfeld 2 auf mit bevorzugt einer Mehrzahl von Reglern 3 und/ oder Tastern 4, sowie bevorzugt ein Display 5 zum Anzeigen der insbesondere über die Regler 3 und/ oder Taster 4 einzustellenden Parameter. Bevorzugt ist über den Regler 3 eine Rührwerkdrehzahl einstellbar und über den oder die Taster 4 die Temperatur einer Aufheizvorrichtung.

Des Weiteren verfügt die Küchenmaschine 1 über eine Rührgefäßaufnahme 6. In diese ist ein Rührgefäß 7 insbesondere bevorzugt im Fußbereich desselben formschlüssig aufnehmbar und halterbar. Das Rührgefäß 7 ist bevorzugt im Wesentlichen rotationssymmetrisch ausgebildet, mit einer zentralen Vertikalachse x.

Im Bodenbereich weist das Rührgefäß 7 bevorzugt ein Rührwerk 8 auf. Dieses ist in der Zuordnungsstellung des Rührgefäßes 7 in der Gefäßaufnahme 6 formschlüssig gekoppelt mit einem in der Küchenmaschine 1 vorgesehenen Motor 9, insbesondere Elektromotor.

Die Elektroversorgung des Elektromotors 9 sowie einer weiter bevorzugt behälterbodenseitig vorgesehenen Aufheizeinrichtung und darüber hinaus auch der elektrischen Steuerung der gesamten Küchenmaschine 1 ist über ein Netzanschlusskabel 10 erreicht.

Das Rührgefäß 7 ist weiter bevorzugt insbesondere im Betrieb des Rührwerks 8 und/oder der Aufheizeinrichtung durch einen Deckel 11 verschlossen.

Bei dem Elektromotor 9 handelt es sich bevorzugt um einen Reluktanzmotor, weiter bevorzugt um einen Elektromotor gemäß EP 1656 724 B1. Bezüglich der Ausgestaltung des Motors wird der Inhalt dieser Patentschrift hiermit vollinhaltlich in die Offenbarung vorliegender Erfindung mit einbezogen, auch zu dem Zweck, Merkmale dieser Patentschrift in Ansprüche vorliegender Erfindung mit einzubeziehen.

Der Elektromotor 9 weist im Wesentlichen einen auf einem Rotorachskörper 12 mit einer Rotorachse aufsteckbaren Rotor auf. Die Rotorachse wird in der Betriebsstellung der Küchenmaschine 1 von deren Vertikalachse x aufgenommen.

An den Rotorachskörper 12 ist in Betriebsstellung im Bereich eines vertikal unteren Endes ein Lüfterrad drehfest angeordnet, insbesondere an dem Rotor bzw. dem Rotorachskörper 12 angeflanscht. Weiter ist im Wesentlichen Bestandteil des Elektromotors 9 ein Stator 14 mit einem bevorzugt zweiteiligen Statorabdeckkörper zur Aufnahme von Statorspulen, eine Geberscheibe und zwei beidseitig endseitig des Stators 14 an diesem befestigte, die Enden des Rotorachskörpers 12 lagernde Brücken 15,16. Der Stator 14 umfasst den Rotor vollständig.

Der Statorkern des Stators 14 ist im Wesentlichen ringförmig, im Grundriss mehreckig ausgebildet, so in dem dargestellten Ausführungsbeispiel bevorzugt im Wesentlichen in Form eines Achtecks.

Der Elektromotor 9 ist im Wesentlichen bodenseitig in der Küchenmaschine 1 angeordnet, weiter bevorzugt insbesondere innerhalb eines Gerätegehäuses 17.

Das Gerätegehäuse 17 ist bevorzugt mehrteilig ausgebildet, so im Wesentlichen zweiteilig, hierbei eine den Boden bildende Gehäusewanne 18 und ein als Chassis 19 ausgebildetes, tragendes Gehäuseteil aufweisend.

Das Chassis 19 umfasst weiter bevorzugt auch die Rührgefäßaufnahme 6.

Weiter bevorzugt ist der Elektromotor 9 in einem Aufnahmeteil 13 gehaltert. Dieses Aufnahmeteil 13 sitzt in der fertig montierten Stellung der Küchenmaschine 1 bevorzugt nicht durch gesonderte Maßnahmen fixiert auf dem nach innen weisenden Boden 20 der Gehäusewanne 18 auf.

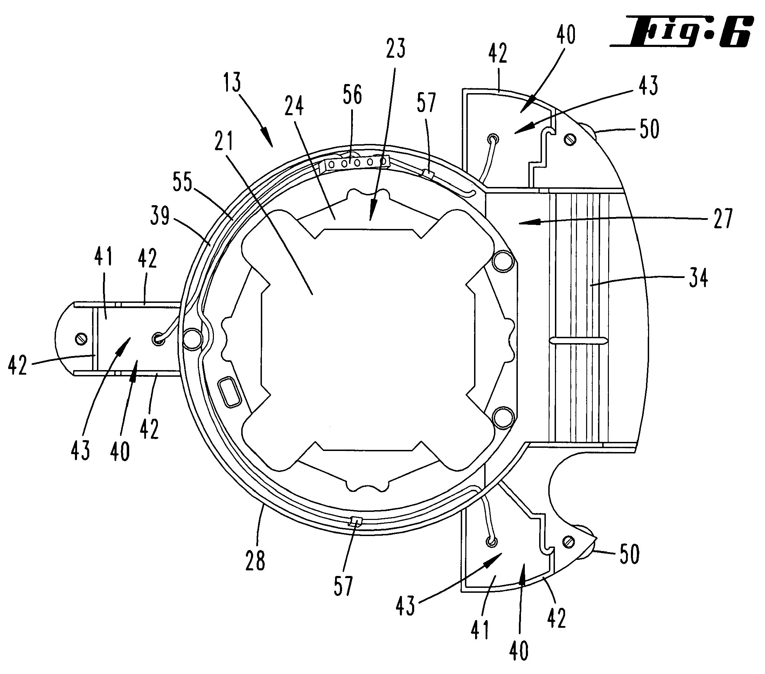

Das Aufnahmeteil 13 ist mit Bezug auf einen Grundriss gemäß Fig. 6 zunächst im Wesentlichen kreisringförmig ausgebildet, mit einer zentralen Durchbrechung 21 zur Aufnahme des Elektromotors 9. Die Durchbrechung 21 ist hierbei bezüglich der Grundrissfläche so ausgebildet, dass der Elektromotor 9 mit seinem Stator 14 bevorzugt spielfrei umfasst ist.

In fertig montierter Stellung der Küchenmaschine 1 ist das Aufnahmeteil 13 von einem deckelartigen Gehäuseabschnitt 22 überfangen, hierbei im Wesentlichen eine in Betriebsstellung horizontal ausgerichtete, den Stator 14 überdeckende Decke ausbildend.

Die Decke des Gehäuseabschnittes 22 ist durchsetzt von einem aus dem Stator 14 in Betriebsstellung nach vertikal oben abragenden freien Ende des Rotorachskörpers 12, wobei weiter dieses freie Ende wandungsaußenseitig zur Formschlussmitnahme eines entsprechenden Kupplungsabschnittes des gefäßseitigen Rührwerks 8 profiliert ist.

In dem Aufnahmeteil 13 ist innenseitig ein zentrales Bauelement 23 eingezogen. Dieses erstreckt sich mit Bezug auf einen Grundriss gemäß Fig. 6 im Wesentlichen über die gesamte freie innere Erstreckung des Aufnahmeteiles 13 im Bereich der Durchbrechung 21, bildet entsprechend eine Trennung des Aufnahmeteils 13 insgesamt in einen vertikal oberen und einen vertikal unteren Bereich.

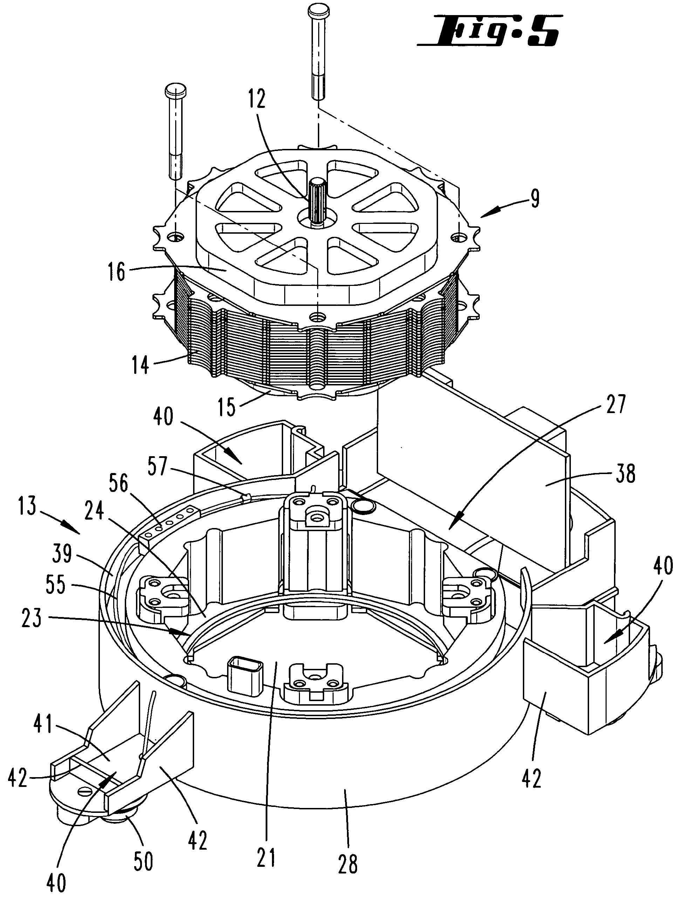

In einem zum Boden 20 vertikal beabstandeten, weiter bevorzugt parallel zu diesem verlaufenden Boden 24 des Bauelements 23 ist die an die umlaufende Kontur der zugeordneten Brücke 15 des Elektromotors 9 angepasste Durchbrechung 21 vorgesehen. Diese ist durchsetzt von der zugeordneten, vertikal unteren Brücke 15, wobei sich der Elektromotor 9 oberseitig unter Zwischenschaltung einer umlaufenden Dichtung 25 mittels des Stators 14 auf dem Boden 24 abstützt. Es ergibt sich entsprechend nur eine strömungsmäßige Verbindung zwischen dem durch das Aufnahmeteil 13 getrennten oberen und unteren Bereich durch das Motorinnere, entsprechend durch den, den Rotorachskörper 12, den Rotor sowie im Wesentlichen das Lüfterrad und vom Stator 14 umgebenden Bereich. Der Elektromotor 9 ist insgesamt in dem Aufnahmeteil 13 befestigt, bevorzugt mittels in Figur 5 dargestellter Schrauben, die Teilbereiche des Stators 14 achsparallel durchsetzend mit entsprechend positionierten Schraubaufnahmen des Aufnahmeteils 13 zusammenwirken.

Die Anordnung ist weiter so gewählt, dass die vertikal untere Brücke 15 mit vertikalem Abstand oberhalb des Gerätegehäusebodens 20 sich erstreckt, welcher vertikale Abstand bevorzugt etwa dem halben vertikalen Abstand zwischen Gerätegehäuseboden 20 und Boden 24 des Aufnahmeteils 13 entspricht.

Auch die vertikal nach oben weisende Decke der gegenüberliegenden Brücke 16 ist vertikal beabstandet zu der Decke des oberen Gehäuseabschnittes 22 wobei bevorzugt hier ein vertikaler Abstand gewählt ist, der dem vertikalen Abstand zwischen der unteren Brücke 15 und dem Gerätegehäuseboden 20 im Wesentlichen entspricht.

Der Boden 24 des zentralen Bauelements 23 geht über in eine den Stator 14 bevorzugt kreisringförmig umgebende, vertikal ausgerichtete Wandung 26. Diese erstreckt sich von dem Boden 24 ausgehend bevorzugt über die gesamte vertikale Höhe des Stators 14. Hieran anschließend erstreckt sich das zentrale Bauelement 23 bevorzugt und im Wesentlichen mit Bezug zu der Rotorachse nach radial außen, insbesondere parallel ausgerichtet zum Boden 24, wobei die so gebildete Trennwand 27 annähernd vollständig umlaufend an der vertikalen Außenwandung 28 des Aufnahmeteiles 13 befestigt, weiter bevorzugt angeformt ist.

Die Decke des oberen Gehäuseabschnittes 22 sowie weiter bevorzugt die Gehäuseaußenwandung 28 sind wandungsinnenseitig, d.h. dem Elektromotor 9 beziehungsweise dem nachstehend näher beschriebenen Strömungskanälen zugewandt mit einem Schallabsorber-Material 29 versehen. Hierbei handelt es sich bevorzugt um einen offenporigen Schaumstoff, der weiter bevorzugt an den Wandungsabschnitten befestigt, beispielsweise geklebt ist.

Bevorzugt ausgehend von dem Boden 20 der Gehäusewanne 18 ist weiter bevorzugt eine vertikal gerichtete Strömungsschikane 30 ausgebildet. Diese ist ausgeformt durch eine bevorzugt senkrecht zu dem Boden 20 und somit in Betriebsstellung vertikal ausgerichtete Wandung, welche weiter bevorzugt einstückig und materialeinheitlich mit dem Boden 20 ausgebildet ist.

Diese Strömungsschikane 30 umfasst die Vertikalwandung 26 des zentralen Bauelements 23 unter Belassung eines mit Bezug zu der Rotorachse radialen Abstandes vollständig. Die vertikale Höhe der Strömungsschikane 30 ist hierbei so gewählt, dass eine nach radial oben weisende Randkante derselben etwa auf Höhe der halben Vertikalenerstreckung des Stators 14 verläuft. Entsprechend stellt sich neben der radialen Beabstandung zu der Wandung 28 ein vertikaler Abstand zwischen der nach vertikal oben weisenden freien Randkante der Strömungsschikane 30 und der Unterseite der Trennwand 27 ein.

Bevorzugt zu der dem Bedienfeld 2 der Küchenmaschine 1 abgewandten Rückseite der Küchenmaschine 1 hin öffnen sich die durch das zentrale Bauelement 23 getrennten, vertikal übereinanderliegenden Bereiche in einen sich bevorzugt über das Durchmessermaß des kreisringförmigen Abschnitts des Aufnahmeteils 13 erstreckenden Vorraum.

Der durch das zentrale Bauelement 23 gebildete untere Bereich des Aufnahmeteils 13 formt hier einen Zuströmkanal 31 mit einer quer zur Rotorachse betrachteten Breite, die im Wesentlichen dem Innen-Querstreckungsmaß beziehungsweise Durchmessermaß der Außenwandung 28 entspricht, weiter bevorzugt etwa dem 1,1- bis 1,5-Fachen des größten Quererstreckungsmaßes des Stators 14.

Der Zuströmkanal 31 erstreckt sich ausgehend von einer rückwärtig in der Wandung des Chassis 19 vorgesehenen Einströmöffnung 32 unter Bildung eines radialen Luftweges bis zumindest in axialer Überdeckung zu dem Stator 16.

In Strömungsrichtung vor der Strömungsschikane 30 ist im Bereich des Bodens 20 eine schanzenartige Erhebung 33 aus dem Boden 20 herausgeformt.

Die Trennwand 27 des zentralen Bauelements 23 ist in diesem Vorraumbereich unter Bildung des Zuströmkanals 31 im Wesentlichen nach unten in Richtung auf den Boden 20 gerichtet abgewinkelt, hierbei bevorzugt einen spitzen Winkel von 5 bis 15 Grad zu der Vertikalen einschließend, wobei die Trennwand 27 weiter im Bereich des nach unten weisenden Endes der Abwinklung einen bevorzugt parallel zum Boden 20 verlaufenden Bodenabschnitt 34 ausformt. Dieser Bodenabschnitt 34 geht im weiteren Verlauf Richtung Gehäuserückseite wiederum über in einen schräg nach vertikal oben ansteigenden, oberhalb der Einströmöffnung 32 gegen die zugewandte Wandung des Chassis 19 anschließenden Abschnitt.

Es ergibt sich insgesamt mit Bezug auf die Strömungsrichtung vor der Strömungsschikane 30 ein S-förmig ausgebildeter Abschnitt des Zuströmkanals 31.

Zwischen der bevorzugt konzentrisch zur Rotorachse angeordneten Strömungsschikane 30 und der bevorzugt mit Schallabsorber-Material 29 versehenen, weiter bevorzugt im Wesentlichen umlaufenden Außenwandung 28 des Aufnahmeteiles 13 ist ein ringförmiger Strömungskanal 35 belassen, der sich entsprechend gleichfalls zum Vorraum hin in den dort gebildeten Abschnitt des Zuströmkanals 31 öffnet.

Der nach vertikal oben durch die Decke des Gehäuseabschnittes 22 und nach vertikal unten durch die Trennwand 27 begrenzte Bereich formt einen Ausströmkanal 36, der im Wesentlichen gleich gerichtet und entsprechend oberhalb des Zuströmkanals 31 verläuft, weiter entsprechend bevorzugt horizontal und im Wesentlichen in vertikaler Überdeckung zu dem Strömungskanal 35.

In Strömungsrichtung hinter dem Elektromotor 9, weiter bevorzugt dem Vorraumbereich des Zuströmkanals 31 und entsprechend der Rückseite des Gerätes zugewandt, ist auch hier bevorzugt eine Strömungsschikane 37 vorgesehen.

Diese ist bevorzugt gebildet durch eine am Aufnahmeteil 13 befestigte, im Wesentlichen sich vertikal und somit in einer Parallelebene zur Rotorachse erstreckende Platine 38. Diese Platine 38 trägt bevorzugt Elektronikbauteile, insbesondere zur Steuerung und Regelung des Elektromotors 9. Alternativ ist die Strömungsschikane 37 durch einen bevorzugt in Vertikalrichtung sich erstreckenden Wandungsabschnitt des Gehäuseabschnittes 22 gebildet.

Die so gebildete Strömungsschikane 37 erstreckt sich entsprechend bevorzugt ausgehend von der Decke des Gehäuseabschnittes 22 nach vertikal unten bis in den durch die S-förmige Ausgestaltung der Trennwand 27 gebildeten Sickenbereich, dies unter Belassung eines Strömungsweges. Die Strömungsschikane 37 im Ausströmkanal 36 ist entsprechend bevorzugt radial versetzt zu der Strömungsschikane 30 im Zuströmkanal 31, dies weiter bevorzugt in Richtung auf die Geräterückseite.

Die Trennwand 27 zwischen dem Zuströmkanal 31 und dem Ausströmkanal 36 bildet entsprechend die Decke des Zuströmkanals 31 und zugleich den Boden des Ausströmkanals 36.

Zugeordnet der Trennwand 27 ist radial außerhalb der Wandung 26 zwischen dieser und der Außenwandung 28 eine nach oben offene Nut 39 ausgebildet.

Im Wesentlichen mit Bezug auf einen Grundriss gemäß Fig. 6 diametral gegenüberliegend zu dem Zuströmkanal 31 ist an der Außenwandung 28 ein sich radial nach außen erstreckender Ausleger 40 angeformt. Zwei weitere Ausleger 40 sind im Wesentlichen beidseitig der Strömungsschikane 30 ausgebildet. In bevorzugter Ausgestaltung sind die Ausleger 40 materialeinheitlich und einstückig an dem Aufnahmeteil 13 angeformt.

Die drei Ausleger 40 sind weiter bevorzugt so angeordnet, dass diese in einem Grundriss gemäß Fig. 6 im Wesentlichen ein Dreieck aufziehen.

Jeder Ausleger 40 weist eine bevorzugt etwa auf halber vertikaler Höhe der Außenwandung 28 sich erstreckende Stellfläche 41 auf. Diese erstreckt sich bevorzugt in Parallelausrichtung zu dem Boden 24 des Aufnahmeteiles 13.

Jede Stellfläche 41 ist weiter bevorzugt neben der Außenwandung 28 zusätzlich durch Wandungen 42 umlaufend begrenzt.

An jedem Ausleger 40 ist ein Wägemodul 43 befestigt. Dieses Wägemodul 43 weist zunächst einen Waagebalken 44 auf, welcher als sogenannter Halbbalken gestaltet ist. Im Wesentlichen ist der Waagebalken 44 langgestreckt, stabartig ausgeformt mit einem bevorzugt annähernd quadratischen Querschnitt.

Bezüglich der weiteren Ausgestaltung des Wägemoduls 43 wird auf die eingangs genannte DE 10 2009 059242 A1 verwiesen.

In Längserstreckung des Waagebalkens 44 ist dieser zwischen zwei Befestigungsbereichen mit zwei Kerbungen 45 versehen. Diese Kerbungen 45 sind jeweils in eine Vertikalebene des Waagebalkens 44 projiziert, halbkreisförmig gestaltet, wobei weiter die so erreichten, gewölbeförmigen Kerbungen 45 bevorzugt ineinander übergehen derart, dass die so geschaffenen halbscheibenförmigen Kerbungsflächen sich teilweise überlappen.

Der Waagebalken 44 ist weiter bevorzugt mit einem unterzugartigen Plattenteil 46 versehen. Hierbei handelt es sich bevorzugt um ein starres Plattenteil, bevorzugt ein Metall-Blechteil. Oberseitig ist ein Dehnungsmessstreifen 53 auf dem Waagebalken 44 angeordnet.

In vertikaler Überdeckung zu einem Befestigungsbereich des Waagebalkens 44 ist oberseitig des Waagebalkens 44 ein Abstandsteil 47 vorgesehen. Der zugeordnete Befestigungsbereich ist durchsetzt von einer Vertikalbohrung, durch welche eine Schraube 48 zur Festlegung des Waagebalkens 44 an den, die Stellfläche 41 ausbildenden Abschnitt des aufnahmeteilseitigen Auslegers 40 tritt.

Auch der gegenüberliegende, frei auskragende Bereich des Waagebalkens 44 ist mit einer Vertikalbohrung versehen. Diese dient zum Durchsatz einer weiteren Schraube 49 zur Festlegung eines Gerätefußes 50. Der Gerätefuß 50 erstreckt sich hierbei von dem Waagebalken 44 ausgehend nach vertikal unten.

Die Anordnung der entsprechend der Zahl der Ausleger 40 vorgesehenen drei Gerätefüße 50 ist so gewählt, dass jede geometrische Verbindungslinie a zwischen zwei Gerätefüßen 50, insbesondere zwischen vertikalen Körperachsen der Gerätefüße 50, welche Verbindungslinie a eine Kippachse darstellt, zu einem Geräteschwerpunkt S den gleichen Abstand aufweist. Hierdurch ist ein kippsicheres Aufstellen der Küchenmaschine 1 auf einer Arbeitsfläche 51 ermöglicht.

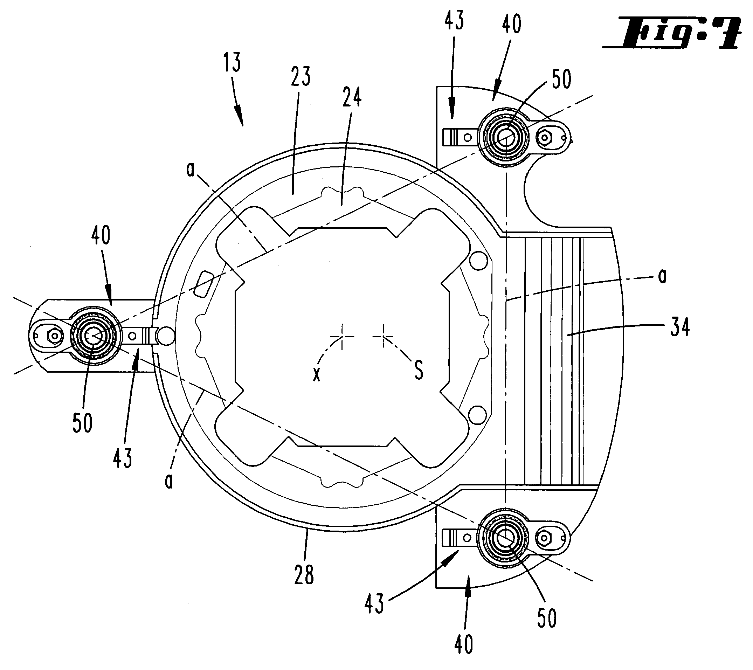

Wie insbesondere aus der Darstellung in den Fig. 6 und 7 zu erkennen, liegt der Geräteschwerpunkt S nicht zwingend auf der Vertikalachse x, kann vielmehr zu dieser insbesondere radial versetzt sein.

Die Gerätefüße 50 durchsetzen Durchbrechungen 52 im Boden 20 der Gehäusewanne 18, welche Durchbrechungen 52 zumindest einen an dem größten Durchmesser eines Gerätefußes 50 angepassten Öffnungsquerschnitt aufweisen, so dass der Gerätefuß 50 insbesondere in vertikaler Richtung freibeweglich die Gehäusewanne 18 durchsetzen kann.

Die Gehäusewanne 18 ist unter Beabstandung zu der Arbeitsfläche 51 beziehungsweise unter Beabstandung zu der durch die Stellflächen der Gerätefüße 50 gegebenen Aufstellebene der Küchenmaschine 1 an dem Chassis 19 beziehungsweise an dem sich oberhalb der Gehäusewanne 18 erstreckenden Gehäuseabschnitt angebunden, so beispielsweise mit diesem verklipst oder verschraubt. Das Chassis 19 bildet hierbei unter anderem bevorzugt auch die Rührgefäßaufnahme 6.

Das gesamte Chassis 19 mitsamt der Gehäusewanne 18 stützt sich über ausgeformte, tragende Elemente 54 auf den Stellflächen 41 der aufnahmeteilseitigen Ausleger 40 ab, wobei das Aufnahmeteil 13 wiederum eine Abstützung auf einer Arbeitsfläche 51 oder dergleichen über die Wägemodule 43 und die hieran angeschlossenen Gerätefüße 50 erfährt.

Entsprechend wird zumindest das Gewicht des Chassis 19 und der Gehäusewanne 18 über die Wägemodule 43 erfasst, darüber hinaus, wie bevorzugt, im Betrieb der Küchenmaschine 1 auch das Gewicht des Rührgefäßes 7, des in dem Rührgefäß 7 aufgenommenen Inhalts sowie weiterer insbesondere mit dem Rührgefäß 7 beispielsweise zu verbindender Komponenten, wie der Deckel 11 oder auch das Rührwerk 8.

Die über die Wägemodule 43 erfassten Gewichtswerte werden, bevorzugt unter Herausrechnen des Eigengewichts der auf die Wägemodule 43 einwirkenden Komponenten, in dem Display 5 angezeigt.

Der Gerätekraftfluss wandert von den Gerätefüßen 50 über die zugeordneten Wägemodule 43 bevorzugt direkt durch die tragenden Elemente 54 des Chassis 19. Somit bleibt das Aufnahmeteil 13 aus dem Kraftfluss, braucht entsprechend keine gesonderten Festigkeitsanforderungen erfüllen.

Die Wägemodule 43 sowie die hieran angeschlossenen Gerätefüße 50 sind in bevorzugter Ausgestaltung zur Montage der Küchenmaschine 1 bereits an dem Aufnahmeteil 13 festgelegt. Darüber hinaus auch eine Verkabelung 55 der Wägemodule 43, welche Verkabelung 55 weiter bevorzugt in der Nut 39 des Aufnahmeteiles 13 aufgenommen ist.

Bevorzugt sind die elektrischen Anschlüsse der Verkabelung 55 aller Wägemodule 43 in einem Sammelstecker 56 zusammengeführt. Der Sammelstecker 56 ist weiter bevorzugt an dem Aufnahmeteil 13 befestigt, so bspw. im Bereich der Nut 39.

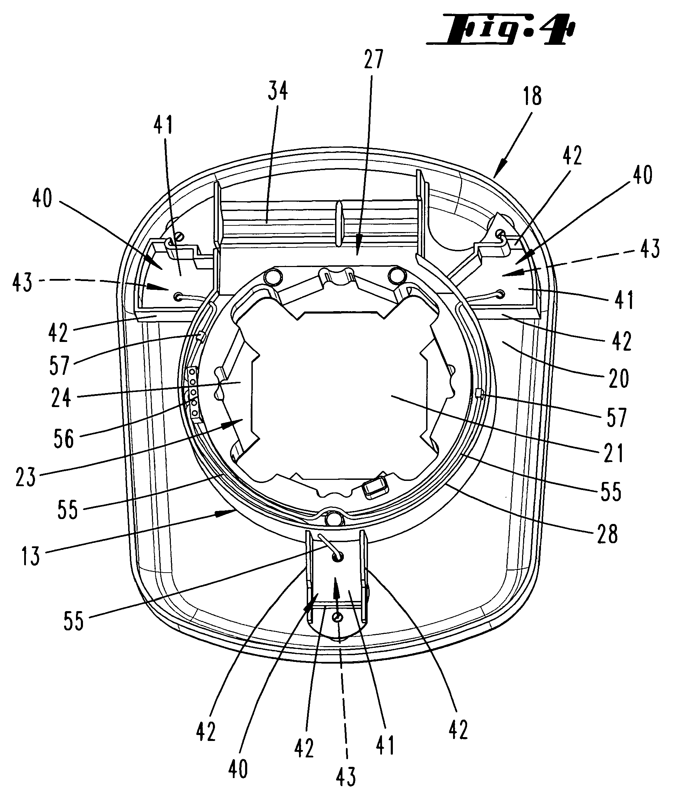

Wie schematisch insbesondere in Fig. 4 dargestellt, ist im Bereich der Verkabelung 55 insbesondere in einem Bereich zwischen einem Wägemodul 43 und dem Sammelstecker 56 jeweils eine Zugentlastung 57 vorgesehen.

Das so bevorzugt gestaltete Aufnahmeteil 13 stellt entsprechend ein Wäge-Sammelmodul dar, welches weiter bevorzugt zugleich der Halterung des Motors 9 dient und/oder eine Luftführung zur Kühlung des Motors 9 ausbildet.

Zur Montage der Küchenmaschine 1 wird in bevorzugter Ausgestaltung zunächst die Gehäusewanne 18 beispielsweise auf einer Arbeitsfläche 51 abgelegt. Die weitere Montage der einzelnen Gerätekomponenten erfolgt bevorzugt grundsätzlich von oben, d.h. in Richtung auf das Wanneninnere.

So wird bevorzugt zunächst das vorbereitete Aufnahmeteil 13 in die Gehäusewanne 18 eingesetzt, dies unter Durchtauchen der aufnahmeteilseitigen Gerätefüße 50 durch die Durchbrechungen 52 der Gehäusewanne 18, welche Gerätefüße 50 entsprechend sich auf derselben Arbeitsfläche 51 abstützen wie die Gehäusewanne 18.

Hiernach erfolgt bevorzugt die Anordnung der weiteren Gerätekomponenten, insbesondere des Motors 9 und des Chassis 19, wobei weiter im Zuge dieses Aufsetzens der weiteren Komponenten bevorzugt auch die elektrische Kontaktierung insbesondere des Motors 9, darüber hinaus auch bevorzugt des Wäge-Sammelsteckers 56 erfolgt.

Sodann wird - gegebenenfalls abschließend - die Gehäusewanne 18, bevorzugt unter paralleler Beabstandung des Bodens 20 der Gehäusewanne 18 zur Arbeitsfläche 51 angehoben, welches Anheben die entsprechend ausgebildeten Durchbrechungen 52 erlauben. In der angehobenen Stellung wird die Gehäusewanne 18 mit dem Chassis 19 verbunden.

Eine Demontage der Küchenmaschine 1 erfolgt bevorzugt in umgekehrter Reihenfolge, weiter bevorzugt beginnend mit einem Lösen der Gehäusewanne 18 vom Chassis 19 und Absenken der Gehäusewanne 18 auf die Arbeitsfläche 51.

Insbesondere durch die Anordnung des Aufnahmeteiles 13 von oben in die Gehäusewanne 18 werden durch das Aufnahmeteil 13, insbesondere durch Abschnitte des Aufnahmeteiles 13, gegebenenfalls notwendige Montageöffnungen in der Gehäusewanne 18 verschlossen.

**Bezugszeichenliste:**

| | | | |
|---|---|---|---|
| 1 | Küchenmaschine | 27 | Trennwand |
| 2 | Bedienfeld | 28 | Gehäuseaußenwandung |
| 3 | Regler | 29 | Schallabsorber-Material |
| 4 | Taster | 30 | Strömungsschikane |
| 5 | Display | 31 | Zuströmkanal |
| 6 | Rührgefäßaufnahme | 32 | Einströmöffnung |
| 7 | Rührgefäß | 33 | Erhebung |
| 8 | Rührwerk | 34 | Bodenabschnitt |
| 9 | Motor | 35 | Strömungskanal |
| 10 | Netzanschlusskabel | 36 | Ausströmkanal |
| 11 | Deckel | 37 | Strömungsschikane |
| 12 | Rotorachskörper | 38 | Platine |
| 13 | Aufnahmeteil | 39 | Nut |
| 14 | Stator | 40 | Ausleger |
| 15 | Brücke | 41 | Stellfläche |
| 16 | Brücke | 42 | Wandung |
| 17 | Gerätegehäuse | 43 | Wägemodul |
| 18 | Gehäusewanne | 44 | Waagebalken |
| 19 | Chassis | 45 | Kerbung |
| 20 | Boden | 46 | Plattenteil |
| 21 | Durchbrechung | 47 | Abstandsteil |
| 22 | Gehäuseabschnitt | 48 | Schraube |
| 23 | Bauelement | 49 | Schraube |
| 24 | Boden | 50 | Gerätefuß |
| 25 | Dichtung | 51 | Arbeitsfläche |
| 26 | Wandung | 52 | Durchbrechung |
| 53 | Dehnungsmessstreifen | | |
| 54 | Tragendes Element | | |
| 55 | Verkabelung | | |
| 56 | Wäge-Sammelstecker | | |
| 57 | Zugentlastung | | |
| | | | |
| a | Verbindungslinie | | |
| x | Vertikalachse | | |
| | | | |
| S | Geräteschwerpunkt | | |

## Patentansprüche

1. Küchenmaschine (1) mit einem Rührgefäß (7) und einem Rührwerk (8) in dem Rührgefäß (7), weiter mit einem elektrisch betriebenen Motor (9) zum Antrieb des Rührwerks (8), mit einem als Chassis (19) ausgebildeten, tragenden Gehäuseteil und einer den Boden (20) bildenden Gehäusewanne (18), wobei weiter Gerätefüße (50) vorgesehen sind, die mit Wägemodulen (43) verbunden sind, **dadurch gekennzeichnet, dass** die Wägemodule (43) an einem gemeinsamen Aufnahmeteil (13) angebunden sind, das die notwendige Verkabelung (55) für die Wägemodule (43) aufweist, wobei die Gehäusewanne (18) auch bei montierten Gerätefüßen (50) mit dem Chassis (19) verbindbar und/ oder von dem Chassis (19) lösbar ist.

2. Küchenmaschine Anspruch 1, **dadurch gekennzeichnet, dass** die Wägemodule (43) an einem gemeinsamen Aufnahmeteil (13) angebunden sind und dass das Aufnahmeteil (13) zugleich zur Halterung des Motors (9) ausgebildet ist und/oder eine Luftführung zur Motorkühlung ausbildet.

3. Küchenmaschine nach einem der vorhergehenden Ansprüche, **dadurch gekennzeichnet, dass** das Aufnahmeteil (13) eine nach oben offene Nut (39) ausbildet, in der die Verkabelung (55) aufgenommen ist.

4. Küchenmaschine nach einem der vorhergehenden Ansprüche, **dadurch gekennzeichnet, dass** das Aufnahmeteil (13) im Wesentlichen kreisringförmig ausgebildet ist.

5. Küchenmaschine nach einem der vorhergehenden Ansprüche, **dadurch gekennzeichnet, dass** drei Gerätefüße (50) vorgesehen sind mit drei zugeordneten Wägemodulen (43).

6. Küchenmaschine nach einem der vorhergehenden Ansprüche, **dadurch gekennzeichnet, dass** eine geometrische Verbindungslinie (a) zweier Gerätefüße (50) eine mögliche Kippachse darstellt und dass jede Kippachse zu einem Geräteschwerpunkt (S) einen gleichen Abstand aufweist.

7. Küchenmaschine nach einem der vorhergehenden Ansprüche, **dadurch gekennzeichnet, dass** die Wägemodule (43) als Waagebalken ausgebildet sind.

8. Küchenmaschine nach einem der vorhergehenden Ansprüche, **dadurch gekennzeichnet, dass** das Aufnahmeteil (13) einen Sammelstecker (56) aufweist, in den sämtliche elektrische Anschlüsse der Wägemodule (43) zusammengeführt sind.

9. Verfahren zur Montage einer Küchenmaschine (1) mit einem Rührgefäß (7) und einem Rührwerk (8) in dem Rührgefäß (7), weiter mit einem elektrisch betriebenen Motor (9) zum Antrieb des Rührwerks (8), mit einem als Chassis (19) ausgebildeten, tragenden Gehäuseteil und einer den Boden (20) bildenden Gehäusewanne (18), wobei weiter Gerätefüße (50) vorgesehen sind, die mit Wägemodulen (43) verbunden sind, **dadurch gekennzeichnet, dass** zunächst die Gehäusewanne (18) vorgesehen wird, dass in die Gehäusewanne (18) von oben ein die Gerätefüße (50), die Wägemodule (43) und die Verkabelung (55) aufweisendes Aufnahmeteil (13) eingesetzt wird und dass sodann der Motor (9) und das Chassis (19) ein- bzw. aufgesetzt wird.

## Claims

1. Food processor (1) comprising a mixing vessel (7) and a mixer (8) in the mixing vessel (7), further comprising an electrically operated motor (9) for driving the mixer (8), comprising a supporting housing part formed as a base frame (19) and a housing trough (18) which forms the base (20), appliance feet (50) also being provided and being connected to weighing modules (43), **characterised in that** the weighing modules (43) are attached to a common receiving part (13) that has the necessary wiring (55) for the weighing modules (43), the housing trough (18) also being connectable to the base frame (19) and/or detachable from the base frame (19) when the appliance feet (50) are assembled.

2. Food processor according to claim 1, **characterised in that** the weighing modules (43) are attached to a common receiving part (13), and **in that** the receiving part (13) is simultaneously designed to hold the motor (9) and/or forms an airflow for cooling the motor.

3. Food processor according to either of the preceding claims, **characterised in that** the receiving part (13) forms a groove (39) that is open at the top and in which the wiring (55) is received.

4. Food processor according to any of the preceding claims, **characterised in that** the receiving part (13) is substantially annular.

5. Food processor according to any of the preceding claims, **characterised in that** three appliance feet (50) are provided together with three weighing modules (43) assigned thereto.

6. Food processor according to any of the preceding claims, **characterised in that** a geometric connecting line (a) between two appliance feet (50) constitutes a possible tilt axis, and **in that** each tilt axis is at the same spacing from the appliance centre of gravity (S).

7. Food processor according to any of the preceding claims, **characterised in that** the weighing modules (43) are formed as weigh beams.

8. Food processor according to any of the preceding claims, **characterised in that** the receiving part (13) comprises a universal adapter plug (56) in which all the electrical connections of the weighing modules (43) are combined.

9. Method for assembling a food processor (1) that comprises a mixing vessel (7) and a mixer (8) in the mixing vessel (7), further comprising an electrically operated motor (9) for driving the mixer (8), comprising a supporting housing part formed as a base frame (19) and a housing trough (18) forming the base (20), appliance feet (50) also being provided and being connected to weighing modules (43), **characterised in that** the housing trough (18) is provided first, **in that** a receiving part (13) comprising the appliance feet (50), the weighing modules (43) and the wiring (55) is inserted into the housing trough (18) from above, and **in that** the motor (9) is then inserted and the base frame (19) is then attached.

## Revendications

1. Robot de cuisine (1) ayant une cuve de mélange (7) et un élément mélangeur (8) dans la cuve de mélange (7) et ayant en outre un moteur électrique (9) pour entrainer l'élément mélangeur (8), un boîtier support formant châssis (19) et un carter (18) formant le fond (20), dans lequel sont prévus en outre des pieds d'appareil (50) qui sont reliés à des modules de pesage (43), **caractérisé en ce que** les modules de pesage (43) sont liés à une pièce de réception commune (13) qui reçoit le câblage (55) nécessaire aux modules de pesage (43), dans lequel le carter (18), même avec les pieds d'appareil (50) montés, est apte à être monté sur le châssis (19) et/ou démonté du châssis (19).

2. Robot de cuisine selon la revendication 1, **caractérisé en ce que** les modules de pesage (43) sont liés à une pièce de réception commune (13) et que la pièce de réception (13) est conçue également pour supporter le moteur (9) et/ou forme un conduit d'aération pour le refroidissement du moteur.

3. Robot de cuisine selon l'une des revendications précédentes, **caractérisé en ce que** la pièce de réception (13) forme une rainure (39) ouverte vers le haut dans laquelle est reçu le câblage (55).

4. Robot de cuisine selon l'une des revendications précédentes, **caractérisé en ce que** la pièce de réception (13) est réalisée sous une forme sensiblement d'anneau circulaire.

5. Robot de cuisine selon l'une des revendications précédentes, **caractérisé en ce que** sont prévus trois pieds d'appareil avec trois modules de pesage (43) associés.

6. Robot de cuisine selon l'une des revendications précédentes, **caractérisé en ce qu'**une ligne de liaison géométrique (a) de deux pieds d'appareil (50) définit un axe de basculement possible et que chaque axe de basculement présente une même distance à un centre de gravité (S) de l'appareil.

7. Robot de cuisine selon l'une des revendications précédentes, **caractérisé en ce que** les modules de pesage (43) sont réalisés sous forme de poutres de pesage.

8. Robot de cuisine selon l'une des revendications précédentes, **caractérisé en ce que** la pièce de réception (13) présente un connecteur lequel réunit l'ensemble des connexions électriques des modules de pesage (43).

9. Procédé de montage d'un robot de cuisine (1) ayant une cuve de mélange (7) et un élément mélangeur (8) dans la cuve de mélange (7) et ayant en outre un moteur électrique (9) pour entrainer l'élément mélangeur (8), un boîtier support formant châssis (19) et un carter (18) formant le fond (20), dans lequel sont prévus en outre des pieds d'appareil (50) qui sont reliés à des modules de pesage (43), **caractérisé en ce que** d'abord est prévu le carter (18), que les pieds d'appareil (50), les modules de pesage (43) et la pièce de réception (13) recevant le câblage (55) sont montés dans le carter (18) par le haut et qu'ensuite le moteur (9) et le châssis (19) y sont logé et monté respectivement.
